# FASCICULE DE BREVET EUROPEEN

(11) **EP 2 761 164 B1**
(45) Date de publication et mention de la délivrance du brevet: **20.02.2019**
(21) Numéro de dépôt: 12775753.2
(22) Date de dépôt: 21.09.2012
(51) Int. Cl.: F03D 1/06, F03B 3/12, F01D 5/14

(54) **PALE DE MACHINE TOURNANTE À STRUCTURE MODULAIRE RENFORCÉE**
DREHMASCHINENKLINGE MIT VERSTÄRKTER MODULARER STRUKTUR
ROTATING MACHINE BLADE WITH REINFORCED MODULAR STRUCTURE

(30) Priorité: 23.09.2011 FR 1158525
(43) Date de publication de la demande: 06.08.2014
(73) Titulaire: Howden Solyvent-Ventec, 69330 Meyzieu (FR)
(72) Inventeur: GODICHON, Alain, François-Emile, 71100 Saint-Remy (FR); DELAISSE, Guy, Constant, Ghislain, 71530 Champforgeuil (FR)
(74) Mandataire: Weber, Jean-François
(86) Numéro de dépôt international: PCT/FR2012/052114
(87) Numéro de publication internationale: WO 2013/041814

(56) Documents cités:
- EP-A2- 1 965 074
- WO-A2-01/46582
- DE-A1- 1 481 671
- FR-A1- 2 459 381
- US-A- 3 552 881

## Description

### DOMAINE TECHNIQUE

La présente invention concerne le domaine technique général des pales équipant des machines tournantes de type ventilateur axial, turbine, éolienne, hydrolienne, etc., et se rapporte plus particulièrement à la construction de pales de grandes dimensions.

Elle concerne notamment une pale destinée à équiper le rotor d'une machine tournante, une machine tournante équipée d'une telle pale, ainsi qu'un procédé de fabrication permettant la réalisation d'une telle pale.

### TECHNIQUE ANTERIEURE

De manière bien connue, les machines tournantes comprennent généralement au moins une roue qui se compose d'un moyeu lié à un arbre, lui-même supporté par des paliers, et d'un ensemble de pales fixées sur ledit moyeu, généralement à intervalles angulaires sensiblement égaux.

De telles pales peuvent être réalisées dans divers matériaux, dont le choix dépend du coût de réalisation ainsi que des contraintes techniques auxquelles est exposée la machine considérée.

En particulier, il est connu de réaliser des pales en alliage d'aluminium coulé lorsque lesdites pales sont de petites et moyennes dimensions, c'est-à-dire d'une longueur (envergure) n'excédant pas 2 mètres.

Généralement, si la pale est de plus grandes dimensions, elle peut être réalisée en matériau composite, par exemple à base de fibres de verre, de carbone ou de Kevlar® intégrées dans une résine de type époxy.

Avantageusement, de tels matériaux composites présentent une faible densité et une bonne résistance mécanique.

Toutefois, leur mise en oeuvre peut parfois s'avérer relativement complexe et coûteuse. En outre, les structures composites peuvent se révéler relativement vulnérables aux impacts provoqués par des particules ou des objets entraînés dans le courant de fluide et qui circulent à travers la machine tournante. Or, la maintenance et le remplacement de tels éléments peuvent se révéler particulièrement difficiles et onéreux.

Enfin, les pales connues peuvent présenter une certaine tendance à vibrer sous l'effet des turbulences de l'écoulement de fluide, ce qui peut provoquer une usure prématurée, voire une rupture, par fatigue.

FR 2 459 381 divulgue un exemple de pale modulaire avec un caisson.

### EXPOSE DE L'INVENTION

Les objets assignés à l'invention visent par conséquent à remédier aux inconvénients susmentionnés et à proposer une nouvelle pale pour machine tournante qui présente une structure particulièrement robuste et qui présente une bonne résistance à la fatigue en cas de soumission à des vibrations tout en étant facile à fabriquer.

Un autre objet assigné à l'invention vise à proposer une nouvelle pale qui soit particulièrement adaptée aux machines de grandes dimensions.

Un autre objet assigné à l'invention vise à proposer une nouvelle pale qui soit peu sensible à la déformation ou aux vibrations.

Un autre objet assigné à l'invention vise à proposer une nouvelle pale dont la maintenance soit simple et peu coûteuse.

Un autre objet assigné à l'invention vise à proposer une nouvelle machine tournante améliorée, qui présente une structure robuste, simple à assembler et peu coûteuse à entretenir.

Un autre objet assigné à l'invention vise à proposer un nouveau procédé d'assemblage de pales destiné aux machines tournantes qui soit simple, rapide et peu onéreux à mettre en oeuvre, notamment pour des besoins de maintenance.

Les objets assignés à l'invention sont atteints à l'aide d'une pale destinée à équiper le rotor d'une machine tournante, ladite pale étant caractérisée en ce qu'elle présente une structure modulaire comprenant :
- un module médian rigide qui s'étend radialement depuis le pied de la pale vers l'extrémité libre de celle-ci, à distance des bords d'attaque et de fuite, ledit module médian étant formé par un caisson lui-même formé par la réunion de deux joues qui sont reliées l'une à l'autre par au moins un longeron, les joues étant reliées par au moins une soudure réalisée sur une excroissance interne desdites joues, en retrait de l'intrados et de l'extrados de la pale,
- un module amont formant bord d'attaque et rapporté sur la portion amont du module médian,
- un module aval formant bord de fuite et rapporté sur la portion aval du module médian.

Les objets assignés à l'invention sont également atteints à l'aide d'une machine tournante, du genre turbine, ventilateur ou éolienne, comportant au moins une pale selon l'invention.

Les objets assignés à l'invention sont enfin atteints à l'aide d'un procédé de fabrication d'une pale modulaire pour machine tournante, ledit procédé comprenant au moins une étape de préfabrication de modules au cours de laquelle on réalise séparément un module médian rigide, un module amont destiné à former bord d'attaque et un module aval destiné à former bord de fuite, l'étape de fabrication du module médian comprenant la formation d'un caisson par soudage de deux joues métalliques au niveau d'une excroissance interne auxdites joues qui est située en retrait de l'intrados et de l'extrados de la pale.

### DESCRIPTIF SOMMAIRE DES DESSINS

D'autres objets caractéristiques et avantages de l'invention apparaîtront plus en détails à la lecture de la description qui suit, ainsi qu'à l'aide des dessins annexés, fournis à titre purement illustratif et non limitatif, parmi lesquels :
- la figure 1 illustre, selon une vue en perspective, un exemple de réalisation de pale conforme à l'invention.
- La figure 2 illustre, selon une vue en perspective coupée, la pale de la figure 1.
- La figure 3 illustre, selon une vue en perspective, le détail d'un exemple de réalisation de module médian conforme à l'invention.
- Les figures 4 et 5 illustrent, selon des vues en section normale à l'axe générateur de la pale, une première et une seconde variante de réalisation d'assemblages de pales conformes à l'invention.
- La figure 6 illustre, selon une vue de détail, un exemple d'assemblage mis en oeuvre au sein d'un module médian conforme à l'invention.
- La figure 7 illustre, selon une vue de détail, une variante d'assemblage de module amont ou aval sur un module médian conforme à l'invention.

### MEILLEURE MANIERE DE REALISER L'INVENTION

La présente invention concerne de manière générale des machines tournantes destinées à être entraînées par, ou au contraire à entraîner, un fluide en mouvement, telles que par exemple les turbines, ventilateurs, notamment axiaux, éoliennes, hydroliennes, etc.

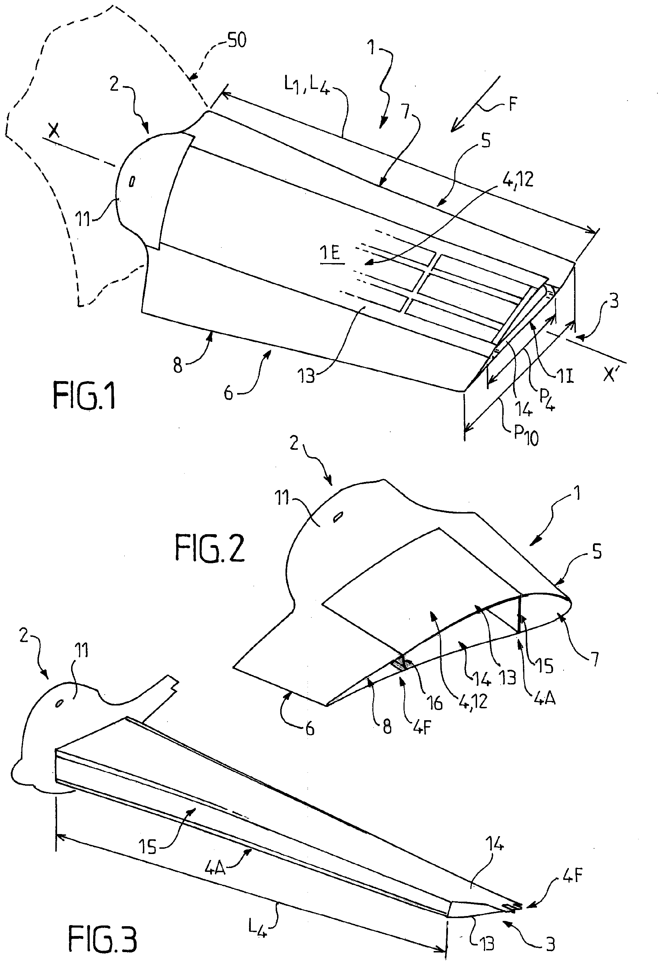

De manière connue, de telles machines comportent un moyeu 50 (suggéré en pointillés sur la figure 1) lui-même lié à un arbre rotatif (non représenté) qui peut être supporté par des paliers.

Au moins une, et de préférence une pluralité de pales 1 sont fixées sur ledit moyeu de sorte à pouvoir coopérer avec le fluide F qui entraîne ou qui est entraîné par la machine tournante.

Chaque pale 1, destinée à équiper le rotor de ladite machine tournante, s'étend sensiblement radialement, globalement selon un axe générateur (XX'), depuis un pied 2 situé à la périphérie du moyeu 50 et au niveau duquel ladite pale est rattachée audit moyeu, jusqu'à une extrémité opposée formant la tête 3 située en périphérie de la roue (ou « *rotor* »).

On désigne par « *envergure* » la longueur L₁ de la pale 1 mesurée sensiblement radialement entre le pied 2 et la tête 3.

A ce titre, bien que l'invention ne soit nullement limitée à un type particulier ou à des dimensions particulières de machine tournante, il est remarquable que la pale 1 sera de préférence destinée à des machines de grandes dimensions, et pourra à cet effet présenter une envergure L₁ supérieure ou égale à 2 m, à 3 m, à 4 m, ou à 5 m, de préférence comprise entre 2 m et 5 m, voire pouvant aller au-delà de 5 m.

Ladite pale pourra notamment être adaptée pour supporter en service des vitesses en périphérie, c'est-à-dire au niveau de la tête 3, pouvant dépasser 100 m/s, voire atteindre ou même dépasser 200 m/s.

Selon une caractéristique importante de l'invention, tel que cela est notamment visible sur les figures 1, 2, 4 et 5, la pale 1 présente une structure modulaire qui comprend :
- un module médian 4, avantageusement rigide, qui s'étend radialement depuis le pied 2 de la pale 1 vers l'extrémité libre 3 de celle-ci, à distance du bord d'attaque 5 et du bord de fuite 6,
- un module amont 7 formant bord d'attaque et qui est rapporté sur la portion amont 4A du module médian,
- un module aval 8 formant bord de fuite 6 et qui est rapporté sur la portion aval 4F du module médian 4.

Avantageusement, la pale 1 conforme à l'invention est ainsi obtenue par la réunion et l'assemblage de modules 4, 7, 8 initialement séparés et distincts, dont un module médian 4 intermédiaire, interposé entre le module amont et le module aval, qui forme l'âme et l'élément porteur de ladite pale 1.

De façon particulièrement préférentielle, l'un et/ou l'autre desdits modules médian 4, amont 7, et aval 8 peuvent être formés d'un seul tenant dans leur longueur, c'est-à-dire dans la direction allant du pied 2 vers la tête 3 de la pale 1.

Avantageusement, la structure conforme à l'invention permet de conférer à la pale 1 une grande robustesse et une rigidité élevée et bien contrôlée qui permet d'obtenir une fréquence propre de résonance relativement élevée, au moins en flexion, tout en conservant une masse relativement réduite.

En outre, une telle structure modulaire permet une réalisation simplifiée des différents éléments constitutifs de la pale, et contribue à faciliter son assemblage.

De préférence, le module médian 4 d'une part, le module amont 7 et/ou le module aval 8 d'autre part pourront être réalisés dans des matériaux distincts.

Ainsi, le module médian 4 pourra être réalisé par exemple dans un matériau métallique, de type acier ou alliage d'aluminium, présentant une rigidité relativement élevée, tandis que le module amont 7 et/ou le module aval 8 pourront être réalisés dans des matériaux plus légers, le cas échéant moins denses ou plus fins, et par exemple dans des tôles minces embouties, en acier ou en alliage d'aluminium, ou bien encore dans des matériaux composites de faible épaisseur obtenus par exemple par moulage.

A ce titre, il est remarquable que la constitution modulaire de la pale, et plus particulièrement sa segmentation en différents modules 4, 7, 8 le long de sa corde, permet de réaliser le profil aérodynamique de la pale par morceaux. Une telle décomposition permet avantageusement de simplifier la réalisation de chaque morceau, et notamment la mise en forme du matériau correspondant, en limitant notamment les pertes de matière, et en évitant l'utilisation d'outillages complexes, et ce même lorsque le profil global à réaliser présente une forme particulièrement complexe. De préférence, la largeur P₄ du module médian 4, mesurée selon la corde 10 de la pale 1 est supérieure ou égale à 20 %, à 25 %, à 30 %, à 40 %, à 50 %, à 60 % voire à 75 % de la longueur P₁₀ de ladite corde 10.

En d'autres termes, le module médian 4 occupe, dans un plan orthoradial de la pale, normal à l'axe générateur (XX'), une distance (largeur) significative, voire majoritaire au regard de la distance (largeur) séparant le bord d'attaque 5 du bord de fuite 6, les modules amont 7 et aval 8 formant de préférence essentiellement les bords terminaux de ladite pale accolés sensiblement au niveau des chants du module médian 4.

Par ailleurs, la largeur P₄ du module médian 4 est de préférence, selon le cas, inférieure ou égale à 80 %, voire à 70 %, 60 % ou 50 % de la longueur P₁₀ de corde de la pale.

Tel que cela est illustré sur les figures 1 et 3, la longueur L₄ du module médian 4, considéré selon l'axe générateur (XX'), est quant à elle de préférence supérieure ou égale à 40 %, à 50 %, à 60 %, à 75 %, à 80 %, à 90 % de l'envergure L₁ de la pale, voire sensiblement égale à ladite envergure de pale.

En d'autres termes, le module médian 4 s'étend de préférence sensiblement sur la majorité, voire la totalité de la longueur de la pale 1, considérée radialement entre le pied 2 et la tête 3 de ladite pale.

Avantageusement, un module médian 4 ainsi dimensionné confère une ossature particulièrement rigide à la pale 1 qui lui procure une bonne rigidité, une bonne résistance mécanique et une bonne stabilité sensiblement sur toute son envergure L₁.

Le cas échéant, selon une variante de réalisation non représentée, la tête 3 de la pale 1 pourra également, de manière analogue aux bords d'attaque 5 et de fuite 6, être formée par un module de bout, rapporté sur la portion radialement externe du module médian 4, et dont la longueur sera sensiblement complémentaire de celle du module médian 4 pour atteindre l'envergure L₁.

Le module de bout pourra éventuellement, selon le cas, être pris en sandwich entre les modules amont 7 et aval 8, ou bien au contraire coiffer également ces derniers à la manière d'une traverse.

Ainsi, le module médian 4 pourra former une pièce centrale, cernée voire, dans une certaine mesure, protégée par un rebord comprenant trois modules périphériques (amont, aval et de bout), rapportés chacun sur l'un des bords externes dudit module médian 4, et plus particulièrement sur ses chants. Bien entendu, les caractéristiques, procédés d'assemblage, effets techniques et avantages associés à l'un quelconque desdits modules périphériques habillant le module médian 4 peuvent également être valables, *mutatis mutandis,* pour les autres modules périphériques.

Par ailleurs, le module médian 4 sera avantageusement pourvu de moyens de fixation permettant de le relier au moyeu, soit directement, par exemple par boulonnage ou soudage, soit par l'intermédiaire d'un socle 11 spécifique formant un pied de pale, tel que cela est notamment représenté sur les figures 2 et 3, ledit socle 11 pouvant éventuellement être agencé pour permettre l'orientation en azimut de la pale autour de son axe générateur principal (XX').

Par ailleurs, le module médian 4 est de préférence au moins en partie apparent, de sorte à former au moins une partie de l'intrados 1I et/ou de l'extrados 1E de la pale 1.

En d'autres termes, au moins une, voire deux des surfaces externes opposées du module médian 4 (ici les faces supérieure et inférieure sur les figures 1, 2, 4 et 5) sont de préférence agencées pour constituer une portion du profil de la pale au contact duquel le fluide F circule, ladite surface se trouvant dans la portion médiane de ladite pale, dans le prolongement du bord d'attaque 5, et précédant la surface du bord de fuite 6 de manière à assurer sensiblement la continuité du profil aérodynamique.

Selon une caractéristique importante de l'invention, le module médian 4 est formé par un caisson 12 permettant ainsi de conférer au module médian une structure creuse, de type profilé ou poutrelle, de préférence non comblée et par conséquent légère, qui reste néanmoins particulièrement résistante et rigide.

Plus particulièrement, le module médian est formé par le caisson 12 lui-même formé par la réunion de deux joues 13, 14, de préférence métalliques, qui s'étendent chacune de préférence d'un seul tenant sur toute la longueur du module médian 4, et qui sont reliées l'une à l'autre par au moins un longeron 15, et de préférence deux longerons 15, 16, voire davantage.

Lesdites joues pourront par exemple être réalisées à partir de tôles d'épaisseur idoine, éventuellement emboutie et/ou usinée pour lui conférer le profil et la répartition d'épaisseur souhaitée.

Lesdits longerons 15, 16 pourront avantageusement être formés par des tôles ou des plaques métalliques sensiblement planes et qui relient, à la manière d'entretoises, de préférence sensiblement perpendiculaires aux joues, et de préférence orientées sensiblement radialement, les joues métalliques 13, 14 qui forment ainsi respectivement une joue supérieure 13 d'extrados et une joue inférieure 14 d'intrados.

De préférence, on disposera au moins un longeron 15 vers le chant amont 4A du caisson 12 et l'autre 16 au niveau du chant aval 4F dudit caisson.

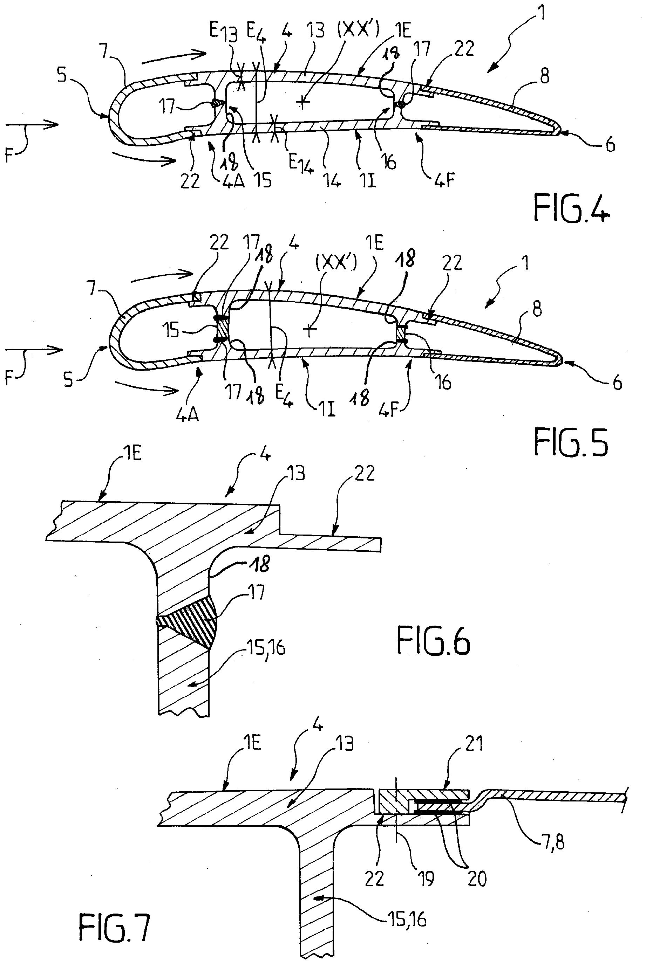

Selon le cas, et notamment selon l'épaisseur E₄ que l'on doit conférer au module médian 4, l'un et/ou l'autre des longerons 15, 16 pourra être soit formé par une pièce intermédiaire rapportée, raccordée aux joues par ses deux bords opposés, tel que cela est illustré sur la figure 5, soit encore, selon une variante de réalisation correspondant notamment à la figure 4, correspondre à la réunion de deux demi-longerons venus chacun de matière avec la joue 13, 14 qui lui correspond.

Dans l'un et l'autre cas, les longerons 15, 16 pourront être amorcés, ou les demi-longerons entièrement réalisés, en prévoyant des excroissances internes 18 faisant saillie à partir du plan principal de chaque joue 13, 14 du côté interne des joues, c'est-à-dire dans l'épaisseur de la pale, à l'opposé de la surface d'extrados ou d'intrados correspondante.

On pourra notamment usiner à cet effet lesdites joues 13, 14 dans la masse, en laissant saillir lesdites excroissances 18 formant les bases des longerons ou les corps des demi-longerons.

De préférence, la liaison permanente entre les joues, et plus particulièrement entre les joues et leurs longerons respectifs, pourra être réalisée par soudage, et ce de manière particulièrement simple et économique.

Ainsi, avantageusement, et selon une caractéristique importante de l'invention, les joues 13, 14, de préférence métalliques, sont reliées l'une à l'autre, directement ou indirectement par l'intermédiaire d'une entretoise formée par les longerons 15,16, par au moins une soudure 17 réalisée, par exemple par cordon ou par points, sur une excroissance interne 18 desdites joues, en retrait de l'intrados 1I et de l'extrados 1E de la pale 1. Selon ce montage, les joues 13, 14 sont reliées sur chaque longeron 15, 16 par au moins une soudure 17 qui assure ainsi la jonction entre les excroissances 18 et chaque longeron 15, 16 dans une zone située à distance de l'intrados 1I et de l'extrados 1E.

De façon particulièrement avantageuse, une telle disposition des soudures 17 permet non seulement de limiter leur nombre, de faciliter leur réalisation en offrant une excellence accessibilité aux parties soudées, mais en outre de disposer les soudures dans une zone relativement préservée, en retrait des faces extérieures visibles de la pale, et à l'intérieur du volume du caisson 12, qui correspond à une zone de faible contrainte, y compris lorsque la pale subit une déformation en flexion et notamment lorsqu'elle est susceptible de vibrer sous son premier mode propre sous l'effet de pressions non stationnaires entraînant une forte turbulence dans l'écoulement.

Le titulaire a en effet pu mettre pratiquement en évidence que sous l'effet de la vibration de pale sur son premier mode, les contraintes se distribuaient dans les longerons 15, 16 d'un module médian 4 conforme à l'invention d'une manière particulière. Il s'avère en effet que l'étude de la distribution des contraintes dans les conditions définies ci-dessus met en évidence que c'est précisément dans les zones médianes des longerons 15, 16, c'est-à-dire dans les zones les plus éloignées des intrados et extrados que les contraintes sont faibles, voire les plus faibles dans la pale 1. Cette particularité met en évidence tout l'intérêt de mettre en place les soudures 17 dans des zones pas ou peu sollicitées sur le plan mécanique de telle sorte que les soudures 17 sont très résistantes à la fatigue.

Ainsi, l'assemblage du module médian 4 présente une bonne robustesse et est particulièrement peu sensible à la fatigue.

Selon une caractéristique préférentielle qui peut également constituer une invention à part entière, les parois du caisson 12, et plus particulièrement les joues 13, 14 et les longerons 15, 16, peuvent également présenter une épaisseur E₁₃, E₁₄ variable, et de préférence décroissante, entre le pied 2 de la pale 1 et l'extrémité libre 3 de cette dernière.

A cet effet, les joues 13, 14 pourront notamment être usinées avec un profil par sections présentant localement une plus forte épaisseur afin d'augmenter la rigidité et réduire les contraintes provoquées par exemple par les vibrations naturelles de la pale en rotation.

Bien entendu, la variation d'épaisseur, et plus particulièrement la décroissance d'épaisseur pourra s'opérer de manière continue ou bien encore être fractionnée radialement par tronçons successifs le long de l'axe générateur (XX'), la pale présentant toutefois de préférence globalement un pied 2 plus fort, plus épais, et de préférence de superficie plus étendue, que sa tête 3.

De préférence, le module amont 7 et /ou le module aval 8 seront exclusivement portés par le module médian, et/ou par le pied de pale.

Par ailleurs, le module amont 7 et/ou le module aval 8 seront de préférence rapportés sur le module médian 4, et plus particulièrement sur le caisson 12, par un assemblage aisément réversible, tel qu'un vissage 19 et/ou un collage 20 de sorte notamment à pouvoir être remplacés sans causer de dommage au module médian 4.

Plus particulièrement, tel que cela est illustré sur la figure 5, il sera envisageable de combiner vissage 19 et collage 20 en utilisant par exemple un étrier 21 plaqué par vissage contre un renfoncement ou un décrochement 22 de la joue 13, 14, destiné à accueillir l'extrémité libre correspondante du module amont 7 ou du module aval 8 disposé en vis-à-vis du chant du caisson 12, ledit étrier 21 venant d'une part compresser ladite extrémité du module amont ou aval contre la joue 13, 14, et d'autre part renforcer la liaison obtenue en disposant une ou deux couches d'adhésif entre ledit module amont ou aval d'une part et la surface de la joue 13, 14 et/ou celle de l'étrier 21 d'autre part.

Par ailleurs, le module amont 7 et/ou le module aval 8 pourront être retenus radialement, à l'encontre de la force centrifuge développée lors de la mise en rotation de la pale, par au moins une butée d'appui (non représentée) associée au module médian 4.

Ladite butée d'appui pourra par exemple être du genre épaulement ou indentation et se dresser selon une direction sensiblement orthoradiale à la direction principale d'extension (XX') de la pale, ladite butée pouvant par exemple être située sensiblement au niveau du pied 2, pour exercer une retenue par traction, ou bien au contraire sensiblement au niveau de la tête 3 afin de retenir en compression le module amont et/ou le module aval.

Bien entendu, l'homme du métier sera à même d'adapter la pale 1 conforme à l'invention en sélectionnant ou en combinant librement au besoin l'une ou l'autre des caractéristiques susmentionnées.

Bien entendu, la présente invention concerne également en tant que telle la machine tournante pourvue d'une ou plusieurs pales 1 conformes à l'invention, de préférence équiréparties sur le rotor de ladite machine, ainsi qu'un procédé d'assemblage d'une telle pale modulaire pour machine tournante.

Plus particulièrement, ledit procédé pourra comprendre au moins une étape (a) de préfabrication de modules au cours de laquelle on réalise séparément un module médian 4 rigide, un module amont 7 destiné à former bord d'attaque 5 et un module aval 8 destiné à former bord de fuite 6, notamment avec l'un ou l'autre des matériaux et en utilisant l'un ou l'autre des procédés mentionnés plus haut, puis une étape (b) d'assemblage au cours de laquelle on réunit, de préférence par fixation aisément réversible ou démontable, lesdits modules 4, 7, 8 en fixant le module amont 7 sur la portion amont 4A du module médian 4 et le module aval 8 sur la portion aval 4F opposée dudit module médian 4, et plus particulièrement sur les chants correspondants du caisson 12, de sorte à reconstituer la pale 1, en plaçant sensiblement les trois modules en enfilade dans le sens de la corde, dans le prolongement l'un de l'autre.

Avantageusement, au cours de l'étape d'assemblage, on aligne sensiblement les surfaces respectives des trois modules dans le prolongement l'une de l'autre de sorte à reconstituer un profil aérodynamique sensiblement continu et lisse.

A ce titre, tel que cela est illustré sur la figure 5, les extrémités d'accueil du module médian 4 comme celles des modules amont 7 et aval 8 pourront avantageusement présenter des décrochements 22 permettant un emboîtement et une superposition des différents éléments constitutifs de la jonction entre les modules tout en conservant globalement des surfaces externes apparentes disposées dans le prolongement les unes des autres.

L'invention concerne également un procédé de fabrication d'une pale modulaire pour machine tournante, ledit procédé comprenant au moins une étape (a) de préfabrication de modules au cours de laquelle on réalise séparément un module médian 4 rigide, un module amont 7 destiné à former bord d'attaque 5 et un module aval 8 destiné à former bord de fuite 6.

Selon l'invention, l'étape de fabrication du module médian comprend la formation d'un caisson 12 par soudage de deux joues 13, 14, de préférence métalliques, au niveau d'une excroissance interne18 auxdites joues qui est située en retrait de l'intrados et de l'extrados de la pale.

En soudant ainsi les deux joues 13,14 qui forment respectivement l'extrados et l'intrados du module médian 4 par une soudure 17 s'étendant à distance de l'extrados et de l'extrados dans une zone médiane peu ou pas sollicitée mécaniquement lors de vibrations, on obtient ainsi, et de manière très simple, un module médian 4 présentant une très bonne résistance à la fatigue.

Ainsi, le mode de construction de pales 1 conformes à l'invention présente de nombreux avantages, en particulier lors de la réalisation de pales de grandes dimensions.

Tout d'abord, une telle pale, et plus particulièrement sa structure métallique, même lorsqu'elle présente une forme globalement complexe, est relativement facile à assembler, avec, le cas échéant, un nombre réduit de soudures.

Ensuite, la construction d'un caisson porteur métallique de rigidité contrôlée tout le long de l'envergure de la pale et épousant la surface externe de celle-ci permet d'obtenir une première fréquence propre de pale élevée sur son mode de flexion, avec une masse réduite. Il en est du reste de même pour les autres modes de vibration naturelle de la pale.

En outre, la construction métallique de la pale est réalisée avec un nombre réduit de soudures situées dans des zones où les contraintes alternées seront faibles, notamment dans le cas où la pale subit des vibrations naturelles résultant d'efforts aérodynamiques non stationnaires auxquels elle peut être soumise de façon occasionnelle, régulière ou encore permanente. Ceci est donc particulièrement avantageux pour obtenir une bonne tenue en fatigue sous ce type de contraintes.

Enfin, la construction d'un caisson porteur métallique, de préférence en acier, assure une meilleure tenue de la structure vis-à-vis des impacts que pourrait subir la pale du fait de particules, pièces, ou objets transportés dans le courant de fluide, en particulier lorsqu'il s'agit de corps étrangers pénétrant accidentellement dans un courant de fluide F, et notamment un courant d'air, possédant une grande vitesse. Du reste, si de tels impacts peuvent rester dommageables pour les modules périphériques, potentiellement les plus exposés, et notamment pour le module amont formant le bord d'attaque ou bien l'éventuel module de bout, ceci n'a que peu de conséquences en pratique puisque ces parties sont réalisées à moindre coût dans des matériaux légers et peuvent être aisément remplacées, à un coût bien moindre que celui que représenterait le remplacement de l'intégralité de la pale.

Il est ainsi possible d'obtenir une grande longévité de la pale, et plus globalement de la machine tournante qui l'utilise, à moindre frais, en conservant durablement l'ossature rigide du module médian et en ne remplaçant à l'occasion que les pièces d'usure relativement bon marché que constituent les modules amont et aval, et le cas échéant le module de bout.

### POSSIBILITE D'APPLICATION INDUSTRIELLE

L'invention trouve son application industrielle dans la fabrication de pales pour machines tournantes, en particulier pour ventilateurs industriels.

## Revendications

1. Pale (1) destinée à équiper le rotor d'une machine tournante, ladite pale présentant une structure modulaire comprenant :
- un module médian (4) rigide qui s'étend radialement depuis le pied (2) de la pale vers l'extrémité libre (3) de celle-ci, à distance des bords d'attaque (5) et de fuite (6), ledit module médian (4) étant formé par un caisson (12)
- un module amont (7) formant bord d'attaque et rapporté sur la portion amont (4A) du module médian,
- un module aval (8) formant bord de fuite et rapporté sur la portion aval (4F) du module médian
**caractérisée en ce que** le caisson (12) est lui-même formé par la réunion de deux joues (13, 14) qui sont reliées l'une à l'autre par au moins un longeron (15), les joues (13, 14) étant reliées par au moins une soudure (17) réalisée sur une excroissance interne (18) desdites joues, en retrait de l'intrados (1I) et de l'extrados (1E) de la pale (1).

2. Pale selon la revendication 1 **caractérisée en ce que** les joues (13, 14) s'étendent chacune de préférence d'un seul tenant sur toute la longueur du module médian, et sont reliées l'une à l'autre par deux longerons (15, 16).

3. Pale selon la revendication 1 ou 2 **caractérisée en ce que** la largeur (P₄) du module médian (4) est supérieure ou égale à 20 %, à 25 %, à 30 %, à 40 %, à 50 %, à 60 % voire à 75 % de la longueur (P₁₀) de corde (10) de la pale (1).

4. Pale selon la revendication 1, 2 ou 3 **caractérisée en ce que** la longueur (L₄) du module médian est supérieure ou égale à 40 %, à 50 %, à 60 %, à 75 %, à 80 %, à 90 % de l'envergure de la pale (L₁), voire sensiblement égale à ladite envergure de pale.

5. Pale selon l'une des revendications précédentes **caractérisée en ce que** le module médian (4) est au moins en partie apparent de sorte à former au moins une partie de l'intrados (1I) et/ou de l'extrados (1E) de la pale (1).

6. Pale selon l'une des revendications 1 à 5 **caractérisée en ce que** les parois du caisson (12) présentent une épaisseur variable, et de préférence décroissante, entre le pied (2) de la pale et l'extrémité libre (3) de cette dernière.

7. Pale selon l'une des revendications précédentes **caractérisée en ce que** le module médian (4) d'une part, le module amont (7) et/ou le module aval (8) d'autre part sont réalisés dans des matériaux distincts.

8. Pale selon l'une des revendications précédentes **caractérisée en ce que** le module amont (7) et/ou le module aval (8) sont rapportés sur le module médian (4) par un assemblage aisément réversible, tel que vissage (19) et/ou collage (20), de sorte à pouvoir être remplacés sans causer de dommage au module médian.

9. Pale selon l'une des revendications précédentes **caractérisée en ce que** le module amont (7) et/ou le module aval (8) sont retenus radialement à l'encontre de la force centrifuge par au moins une butée d'appui, du genre épaulement, associée au module médian (4).

10. Pale selon l'une des revendications précédentes **caractérisée en ce qu'**elle présente une envergure supérieure ou égale à 2 m, à 3 m, à 4 m, ou à 5 m.

11. Pale selon l'une des revendications précédentes **caractérisée en ce que** sa tête (3) est formée par un module de bout rapporté sur la portion radialement externe du module médian (4).

12. Machine tournante, du genre turbine, ventilateur ou éolienne, comportant au moins une pale (1) selon l'une des revendications 1 à 11.

13. Procédé de fabrication d'une pale modulaire pour machine tournante, ledit procédé comprenant au moins une étape (a) de préfabrication de modules au cours de laquelle on réalise séparément un module médian (4) rigide, un module amont (7) destiné à former bord d'attaque (5) et un module aval (8) destiné à former bord de fuite (6), **caractérisé en ce que** l'étape de fabrication du module médian comprend la formation d'un caisson par soudage de deux joues métalliques au niveau d'une excroissance interne auxdites joues qui est située en retrait de l'intrados et de l'extrados de la pale.

## Patentansprüche

1. Klinge (1), die dazu bestimmt ist, den Rotor einer Drehmaschine auszustatten, wobei die Klinge eine modulare Struktur aufweist, umfassend:
- ein starres mittleres Modul (4), das sich radial ausgehend vom Fuß (2) der Klinge zu deren freiem Ende (3) erstreckt, beabstandet zu der Eintrittskante (5) und der Austrittskante (6), wobei das mittlere Modul (4) durch einen Kasten (12) gebildet ist,
- ein stromaufwärtiges Modul (7), das die Eintrittskante bildet und an dem stromaufwärtigen Abschnitt (4A) des mittleren Moduls angebracht ist,
- ein stromabwärtiges Modul (8), das die Austrittskante bildet und am stromabwärtigen Abschnitt (4F) des mittleren Moduls angebracht ist,
**dadurch gekennzeichnet, dass** der Kasten (12) selbst durch die Vereinigung von zwei Wangen (13, 14) gebildet ist, die durch wenigstens einen Längsträger (15) miteinander verbunden sind, wobei die Wangen (13, 14) durch wenigstens eine Schweißnaht (17) miteinander verbunden sind, die auf einem inneren Fortsatz (18) der Wangen, von der inneren Wölbfläche (1I) und der äußeren Wölbfläche (1E) der Klinge (1) zurückspringend, gebildet ist.

2. Klinge nach Anspruch 1, **dadurch gekennzeichnet, dass** sich die Wangen (13, 14) vorzugsweise einstückig über die gesamte Länge des mittleren Moduls erstrecken und durch zwei Längsträger (15, 16) miteinander verbunden sind.

3. Klinge nach Anspruch 1 oder 2, **dadurch gekennzeichnet, dass** die Breite (P₄) des mittleren Moduls (4) größer als oder gleich 20 %, 25 %, 30 %, 40 %, 50 %, 60 % oder sogar 75 % der Länge (P₁₀) der Sehne (10) der Klinge (1) ist.

4. Klinge nach Anspruch 1, 2 oder 3, **dadurch gekennzeichnet, dass** die Länge (L₄) des mittleren Moduls größer als oder gleich 40 %, 50 %, 60 %, 75 %, 80 %, 90 % der Spannweite der Klinge (L₁) ist oder sogar im Wesentlichen gleich der Spannweite der Klinge ist.

5. Klinge nach einem der vorhergehenden Ansprüche, **dadurch gekennzeichnet, dass** das mittlere Modul (4) wenigstens zum Teil erkennbar ist, so dass es wenigstens einen Teil der inneren Wölbfläche (1I) und/oder der äußeren Wölbfläche (1E) der Klinge (1) bildet.

6. Klinge nach einem der Ansprüche 1 bis 5, **dadurch gekennzeichnet, dass** die Wände des Kastens (12) zwischen dem Fuß (2) der Klinge und dem freien Ende (3) des Letztgenannten eine variable und vorzugsweise abnehmende Dicke aufweisen.

7. Klinge nach einem der vorhergehenden Ansprüche, **dadurch gekennzeichnet, dass** das mittlere Modul (4) einerseits, das stromaufwärtige Modul (7) und/oder das stromabwärtige Modul (8) andererseits aus unterschiedlichen Materialien hergestellt sind.

8. Klinge nach einem der vorhergehenden Ansprüche, **dadurch gekennzeichnet, dass** das stromaufwärtige Modul (7) und/oder das stromabwärtige Modul (8) an dem mittleren Modul (4) durch eine leicht rückgängig zu machende Verbindung angebracht sind, wie durch Schrauben (19) und/oder Kleben (20), so dass sie ausgetauscht werden können, ohne eine Beschädigung des mittleren Moduls zu verursachen.

9. Klinge nach einem der vorhergehenden Ansprüche, **dadurch gekennzeichnet, dass** das stromaufwärtige Modul (7) und/oder das stromabwärtige Modul (8) durch mindestens einen Stützanschlag vom Typ Schulter, der dem mittleren Modul (4) zugeordnet ist, radial gegen die Zentrifugalkraft gehalten werden.

10. Klinge nach einem der vorhergehenden Ansprüche, **dadurch gekennzeichnet, dass** sie eine Spannweite von größer als oder gleich 2 m, 3 m, 4 m oder 5 m aufweist.

11. Klinge nach einem der vorhergehenden Ansprüche, **dadurch gekennzeichnet, dass** ihr Kopf (3) durch ein Endmodul gebildet ist, das an dem radial äußeren Abschnitt des mittleren Moduls (4) angebracht ist.

12. Drehmaschine vom Typ Turbine, Ventilator oder Windrad, umfassend wenigstens eine Klinge (1) nach einem der Ansprüche 1 bis 11.

13. Verfahren zur Herstellung einer modularen Klinge für eine Drehmaschine, wobei das Verfahren wenigstens einen Schritt (a) der Vorfertigung von Modulen umfasst, bei dem ein starres mittleres Modul (4), ein stromaufwärtiges Modul (7), das dazu bestimmt ist, die Eintrittskante (5) zu bilden, und ein stromabwärtiges Modul (8), das dazu bestimmt ist, die Austrittskante (6) zu bilden, separat hergestellt werden, **dadurch gekennzeichnet, dass** der Schritt der Herstellung des mittleren Moduls die Bildung eines Kastens durch Verschweißen von zwei metallischen Wangen im Bereich eines inneren Fortsatzes der Wangen umfasst, der von der inneren Wölbfläche und der äußeren Wölbfläche der Klinge zurückspringend angeordnet ist.

## Claims

1. Blade (1) intended to equip the rotor of a rotary machine, said blade having a modular structure comprising:
- a rigid middle module (4) that extends radially from the root (2) of the blade towards the free end (3) thereof, at a distance from the leading (5) and trailing (6) edges, said middle module (4) being formed by a chamber (12),
- an upstream module (7) forming a leading edge and attached to the upstream portion (4A) of the middle module,
- a downstream module (8) forming a trailing edge and attached to the downstream portion (4F) of the middle module,
**characterised in that** the chamber (12) is itself formed by the joining of two cheeks (13, 14) that are connected to one another by at least one longitudinal member (15), the cheeks (13,14) being connected by at least one weld (17) produced on an internal protrusion (18) of said cheeks, recessed from the pressure face (11) and the suction face (1E) of the blade (1).

2. Blade according to claim 1, **characterised in that** the cheeks (13, 14) each preferably extend in a single piece over the entire length of the middle module, and are connected to one another by two longitudinal members (15, 16).

3. Blade according to claim 1 or claim 2, **characterised in that** the length (P₄) of the middle module (4) is greater than or equal to 20%, 25%, 30%, 40%, 50%, 60% or even 75% of the length (P₁₀) of the chord (10) of the blade (1).

4. Blade according to claim 1, claim 2 or claim 3, **characterised in that** the length (L₄) of the middle module is greater than or equal to 40%, 50%, 60%, 75%, 80% or 90% of the span (L₁) of the blade, or even substantially equal to said blade span.

5. Blade according to any of the preceding claims, **characterised in that** the middle module (4) is at least partly visible so as to form at least part of the pressure face (1I) and/or of the suction face (1E) of the blade (1).

6. Blade according to any of claims 1 to 5, **characterised in that** the walls of the chamber (12) have a variable thickness, preferably decreasing, between the root (2) of the blade and the free end (3) thereof.

7. Blade according to any of the preceding claims, **characterised in that** middle module (4) on the one hand, and the upstream module (7) and/or the downstream module (8) on the other hand, are produced from distinct materials.

8. Blade according to any of the preceding claims, **characterised in that** the upstream module (7) and/or the downstream module (8) are attached to the middle module (4) by an easily reversible assembly, such as screwing (19) and/or adhesive bonding (20), so as to be able to be replaced without causing damage to the middle module.

9. Blade according to any of the preceding claims, **characterised in that** the upstream module (7) and/or the downstream module (8) are held radially counter to centrifugal force by at least one abutment stop, of the shoulder type, associated with the middle module (4).

10. Blade according to any of the preceding claims, **characterised in that** it has a span greater than or equal to 2 m, 3 m, 4 m or 5 m.

11. Blade according to any of the preceding claims, **characterised in that** its head (3) is formed by an end module attached to the radially external portion of the middle module (4).

12. Rotary machine, of the turbine, fan or wind turbine type, comprising at least one blade (1) according to any of claims 1 to 11.

13. Method for manufacturing a modular blade for a rotary machine, said method comprising at least one step (a) of prefabrication of modules during which there are produced separately a rigid middle module (4), an upstream module (7) intended to form a leading edge (5) and a downstream module (8) intended to form a trailing edge (6), **characterised in that** the step of manufacturing the middle module comprises the formation of a chamber by welding two metal cheeks at a protrusion internal to said cheeks that is situated recessed from the pressure face and suction face of the blade.
